# EUROPÄISCHE PATENTSCHRIFT

(11) **EP 2 429 065 B1**
(45) Veröffentlichungstag und Bekanntmachung des Hinweises auf die Patenterteilung: **13.07.2016**
(21) Anmeldenummer: 11179697.5
(22) Anmeldetag: 01.09.2011
(51) Int. Cl.: H02K 5/10, H02K 9/02, H02K 9/26

(54) **Permanentmagneterregte elektrische Maschine**
Electric machine with permanent magnet excitation
Machine électrique à excitation par aimants permanents

(30) Priorität: 10.09.2010 AT 15062010
(43) Veröffentlichungstag der Anmeldung: 14.03.2012
(73) Patentinhaber: Traktionssysteme Austria GmbH, 2351 Wiener Neudorf (AT)
(72) Erfinder: Neudorfer, Harald, 2514 Traiskirchen (AT)
(74) Vertreter: Sonn & Partner Patentanwälte

(56) Entgegenhaltungen:
- EP-A1- 2 256 907
- WO-A1-90/00828
- WO-A2-00/24113
- DE-B3-102008 011 589
- US-A1- 2003 057 797
- US-A1- 2006 226 717

## Beschreibung

Die Erfindung betrifft eine permanentmagneterregte elektrische Maschine mit einem Stator, mit einer Statorwicklung, einem Rotor mit einem Rotorblechpaket und darin angeordneten Permanentmagneten und einem zwischen dem Stator und dem Rotor ausbildeten Luftspalt, welcher Luftspalt zumindest an einer Seite nach außen abgedichtet ist.

Die gegenständliche Erfindung ist sowohl auf elektrische Maschinen im Motorbetrieb, als auch auf elektrische Maschinen im Generatorbetrieb anwendbar. Die US 2003/0057797 A1, EP 2 256 907 A1 oder US 2006/0226717 A1 beschreiben derartige elektrische Maschinen mit Maßnahmen zum Abdichten des Luftspalts zwischen Stator und Rotor gegenüber der Umgebung mit Hilfe von Abdichtelementen. EP 2256907 A1 ist Stand der Technik nach Artikel 54(3) EPÜ.

Maßnahmen zur Beseitigung ferromagnetischer Partikel aus dem Luftstrom mit Hilfe von Permanentmagneten sind beispielsweise in der DE 10 2008 011 589 B3, der WO 00/24113 A2 oder der WO 90/00828 A1 beschrieben.

Besonders geeignet ist eine Anwendung der permanentmagneterregten elektrischen Maschine als Traktionsmaschine für Schienenfahrzeuge, Busse und andere Straßenfahrzeuge, insbesondere auch für die Verwendung bei Hybridantrieben.

Permanentmagneterregte elektrische Maschinen weisen im Vergleich zu Asynchronmaschinen eine höhere Leistungsdichte auf. Zur Vermeidung der Verschmutzung permanentmagneterregter elektrischer Maschinen, durch das Anziehen ferromagnetischer Partikeln, werden üblicherweise permanentmagneterregte elektrische Maschinen nur in gekapselter Bauweise eingesetzt. Durch die geschlossene Bauweise permanentmagneterregter elektrischer Maschinen ist üblicherweise eine Flüssigkeitskühlung erforderlich, was den Aufwand und die Kosten für eine derartige Maschine erhöht.

Die gegenständliche Erfindung ist sowohl für fremd-ventilierte als auch eigen-ventilierte Maschinen anwendbar. Bei eigen-ventilierten elektrischen Maschinen ist zumindest ein Ventilator drehfest mit dem Rotor bzw. der Welle verbunden.

Die Aufgabe der vorliegenden Maschine besteht in der Schaffung einer permanentmagneterregten elektrischen Maschine, welche auch ohne Gehäuse eingesetzt werden kann und vorzugsweise nur mit Luft gekühlt werden kann. Beispielsweise soll ein Einsatz der permanentmagneterregten elektrischen Maschine in einem Kraftfahrzeug unter relativ schmutzigen Bedingungen möglich sein und trotzdem ein möglichst langer Einsatz gewährleistet sein.

Gelöst wird die Aufgabe erfindungsgemäß durch eine oben genannte permanentmagneterregte elektrische Maschine, bei der im Bereich des Luftspalts am Rotorpressring Permanentmagnete als Opfermagnete zum Anziehen ferromagnetischer Partikel zum Verhindern des Eindringens der ferromagnetischen Partikel in den Luftspalt angeordnet sind. Durch diese Maßnahme wird verhindert, dass ferromagnetischer Staub in den Luftspalt zwischen Stator und Rotor eindringt und dadurch Verluste aufgrund höherer Streufelder auftreten und somit ein Leistungsabfall der Maschine resultiert. Durch eine wirkungsvolle Abdichtung des Luftspalts zwischen Stator und Rotor nach außen kann die permanentmagneterregte elektrische Maschine auch in offener Bauweise angewendet werden, was bisher nicht möglich war. Durch den Einsatz permanentmagneterregter elektrischer Maschinen, die - wie bereits erwähnt - eine höhere Leistungsdichte als vergleichbare Asynchronmaschinen aufweisen, kann somit eine Leistungssteigerung erzielt werden. Durch die offene Bauweise der Maschine wird eine optimale Belüftung gewährleistet, ohne dass aufwendige und kostenintensive Maßnahmen für eine ausreichende Kühlung der Maschine ergriffen werden müssen. Die Magnete zum Anziehen ferromagnetischer Partikel werden im Bereich des Luftspalts platziert und ziehen ferromagnetische Artikel an und verhindern somit, dass sich diese in den kritischen Bereichen der elektrischen Maschine anlagern und dort zu erheblichen elektromagnetischen Verlusten oder auch mechanischen Problemen durch Reibung führen können.

Zur Abdichtung des Luftspalts zwischen Stator und Rotor ist vorteilhafterweise an zumindest einem seitlichen Ende des Rotorblechpakets eine Labyrinthdichtung vorgesehen. Durch entsprechende Gestaltung der Labyrinthdichtung kann das Eindringen ferromagnetischen Staubs wirkungsvoll verhindert werden, ohne dass es durch die Dichtung zu Reibungsverlusten der Maschine kommt.

Gemäß einer Ausbildung der Erfindung ist die Labyrinthdichtung durch einen mit dem Rotorblechpaket verbundenen Rotorpressring, mit zumindest einer darin angeordneten umlaufenden Nut und einem mit dem Stator verbundenen Dichtungskörper, mit zumindest einem korrespondierend zu der zumindest einen Nut ausgebildeten umlaufenden Flansche gebildet. Durch entsprechende Wahl der Anzahl an Nuten und entsprechend korrespondierenden Flanschen wird eine Verlängerung des Weges ferromagnetischer Partikel und somit eine Verbesserung der Dichtwirkung erzielt. Selbstverständlich könnten auch die Nuten am Dichtungskörper und die Flansche am Rotorpressring ausgebildet werden. Bei einer in Bezug auf die Ausrichtung des Luftspalts vertikal angeordneten Labyrinthdichtung kann die zumindest eine Nut und der zumindest eine zugehörige Flansche auch aus festem Material gebildet sein.

Im Falle einer im Bezug auf den Luftspalt horizontalen Ausrichtung der Labyrinthdichtung ist es von Vorteil, wenn der Dichtungskörper aus elastischem Material, vorzugsweise Silikon, gebildet ist. Dadurch kann der Rotor im Stator angeordnet werden, ohne dass die Bestandteile der Labyrinthdichtung demontiert und wieder montiert werden müssen. Durch den aus elastischem Material gebildeten Dichtungskörper können beim Zusammenbau der elektrischen Maschine die Flansche aus elastischem Material entsprechend verformt und schließlich in ihrer gewünschten Position in der entsprechenden Nut platziert werden.

Zusätzlich kann es von Vorteil sein, wenn vor dem Luftspalt zwischen Stator und Rotor Luftleitelemente angeordnet werden. Dadurch kann die Luft vom Luftspalt ferngehalten und beispielsweise in vorgesehene Kühlkanäle im Rotor gelenkt werden und die Wahrscheinlichkeit des Eindringens von ferromagnetischem Staub in den Luftspalt verhindert werden. Die Luftleitelemente können aus Metall oder Kunststoff gebildet sein.

Um eine optimale Kühlung der elektrischen Maschine zu gewährleisten sind im Rotor Kanäle zur Führung einer Kühlluft vorgesehen, welche mit einem Lufteinlass und einem Luftauslass in Verbindung stehen, wobei im Bereich des Lufteinlasses Permanentmagnete zum Anziehen ferromagnetischer Partikel aus der eintretenden Kühlluft angeordnet sind. Durch die Permanentmagnete im Bereich des Lufteinlasses der Kühlkanäle wird somit ein magnetischer Filter gebildet, der verhindert, dass ferromagnetischer Staub in den Kühlkanal dringt und sich dort anlagert und in der Folge durch die auftretenden elektromagnetischen Verluste, aber auch die Reduktion der Kühlwirkung einen Leistungsabfall der Maschine bewirken.

Zusätzlich zu den Permanentmagneten im Bereich des Lufteinlasses kann vor dem Lufteinlass auch ein Filter angeordnet sein. Ein solcher Filter kann durch ein Gewebe oder auch andere Maßnahmen wie zum Beispiel ein Zyklonfilter ,gebildet sein, und mit den oben erwähnten Permanentmagneten in geeigneter Weise kombiniert werden, so dass das Eindringen von Verunreinigungen in die Kühlkanäle der elektrischen Maschine verhindert bzw. reduziert wird.

Um auch im Stillstand der elektrischen Maschine zu verhindern, dass ferromagnetische Partikel in die Kühlkanäle gelangen können, ist es von Vorteil wenn auch im Bereich des Luftauslasses Permanentmagnete zum Anziehen ferromagnetischer Partikel angeordnet sind.

Zusätzlich zu einem derartigen magnetischen Filter im Bereich des Luftauslasses kann auch ein mechanischer Filter im Bereich des Luftauslasses angeordnet sein.

Vorteilhafterweise sind Opfermagnete zum Anziehen ferromagnetischer Artikel im Bereich des Luftspalts am Rotorpressringin in regelmäßigen Winkelabständen zueinander angeordnet. Die Opfermagnete werden vorteilhafterweise in dafür vorgesehene Vertiefungen im Rotorpressring eingeklebt.

Zusätzlich oder alternativ dazu können auch im Bereich der Kühlkanäle derartige Permanentmagnete zum Anziehen ferromagnetischer Partikel angeordnet sein. Bei der Wartung der elektrischen Maschine können allenfalls vorhandene Verunreinigungen von diesen Permanentmagneten entfernt werden, was vorzugsweise durch die Anordnung von Klebebänder geschehen kann.

Die gegenständliche Erfindung wird anhand der beigefügten Zeichnungen, welche Ausführungsbeispiele einer permanentmagneterregten elektrischen Maschine zeigen, näher erläutert.

Darin zeigen:
Fig. 1 eine Seitenansicht auf eine permanentmagneterregte elektrische Maschine;
Fig. 2 ein Ausschnitt eines Schnittbilds durch die elektrische Maschine gemäß Fig. 1 im Bereich des Luftspalts zwischen Stator und Rotor;
Fig. 3 eine perspektivische Ansicht auf einen Teil des Rotors der elektrischen Maschine gemäß Fig. 1;
Fig. 4 ein Schnittbild durch die elektrische Maschine gemäß Figur 1;
Fig. 5a und 5b zwei verschiedene Ausführungsformen eines magnetischen Filters;
Fig. 6a und 6b Detailansichten zweier Ausführungsformen einer Labyrinthdichtung zur Abdichtung des Luftspalts zwischen Stator und Rotor;
Fig. 7 ein Schnittbild einer weiteren Ausführungsform einer permanentmagneterregten elektrischen Maschine unter Verwendung von Luftleitelementen im Bereich des Luftspalts; und
Fig. 8 ein Schnittbild und eine Draufsicht auf einen mit Permanentmagneten kombinierten Zyklonfilter zur Anwendung im Bereich des Lufteinlasses der gegenständlichen permanentmagneterregten elektrischen Maschine.

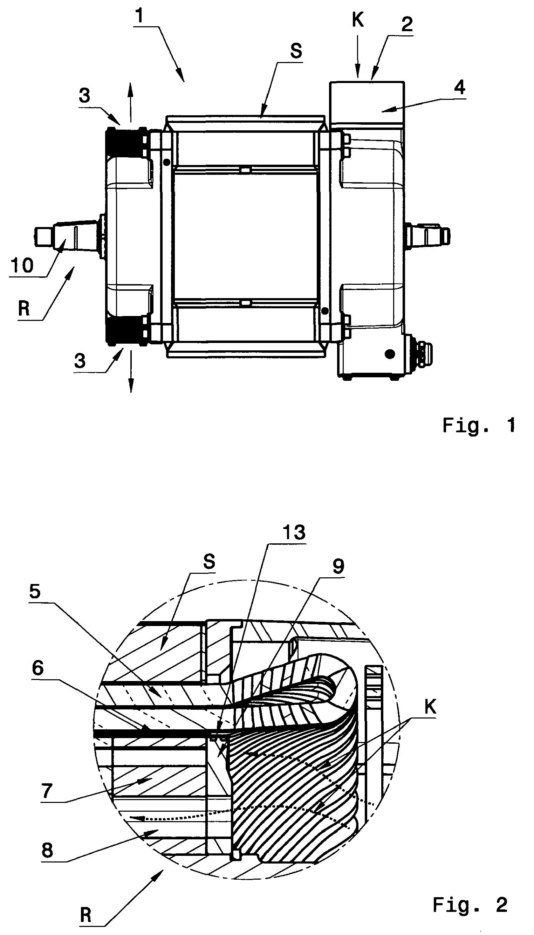

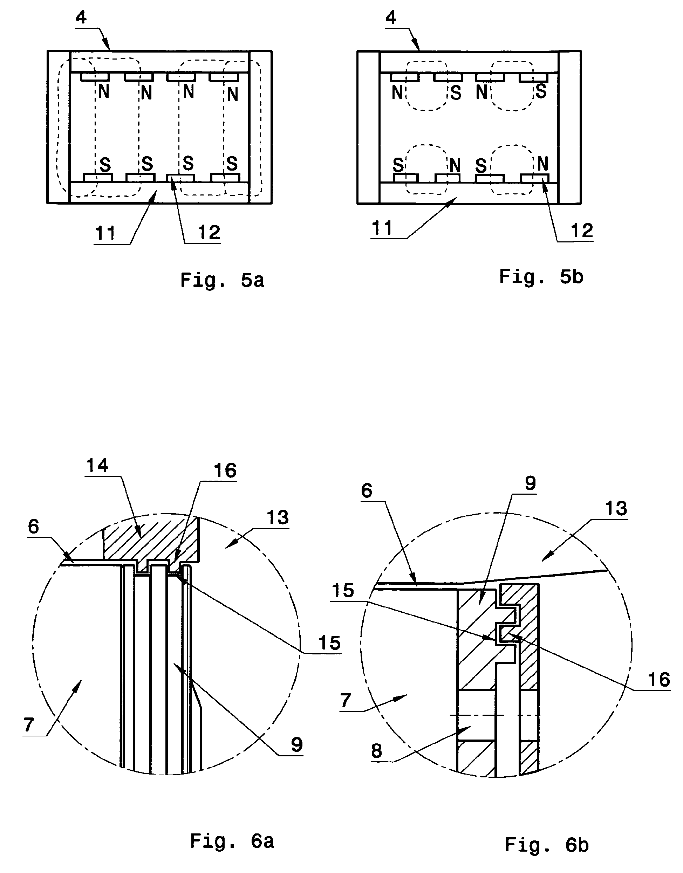

Fig. 1 zeigt eine permanentmagneterregte elektrische Maschine 1 mit einem Stator S, mit einer Statorwicklung 5 (siehe Fig. 2), einem Rotor R mit einem Rotorblechpaket 7 (siehe Fig. 2) und darin angeordneten Permanentmagneten. Der Rotor R ist drehfest mit einer Welle 10 verbunden. Wie in der geschnittenen Detailzeichnung gemäß Fig. 2 ersichtlich ist, wird zwischen dem Rotor R und dem Stator S ein Luftspalt 6 gebildet. Üblicherweise werden derartige permanentmagneterregte elektrische Maschinen 1 nur in geschlossener bzw. gekapselter Bauweise eingesetzt, um zu verhindern, dass sich ferromagnetische Partikel an den Permanentmagneten der Maschine anlagern. Die gegenständliche Erfindung schützt eine gehäuselose, luftgekühlte, permanentmagneterregte elektrische Maschine 1. Um zu verhindern, dass in den Bereich des Luftspalts 6 ferromagnetische Partikel eindringen und elektromagnetische Streufelder hervorrufen, ist erfindungsgemäß vorgesehen, dass der Luftspalt 6 zwischen dem Stator S und dem Rotor R, zumindest an einer Seite nach außen abgedichtet ist. Diese Abdichtung kann durch eine Labyrinthdichtung 13 gebildet werden, welche in Fig. 6 dargestellt ist.

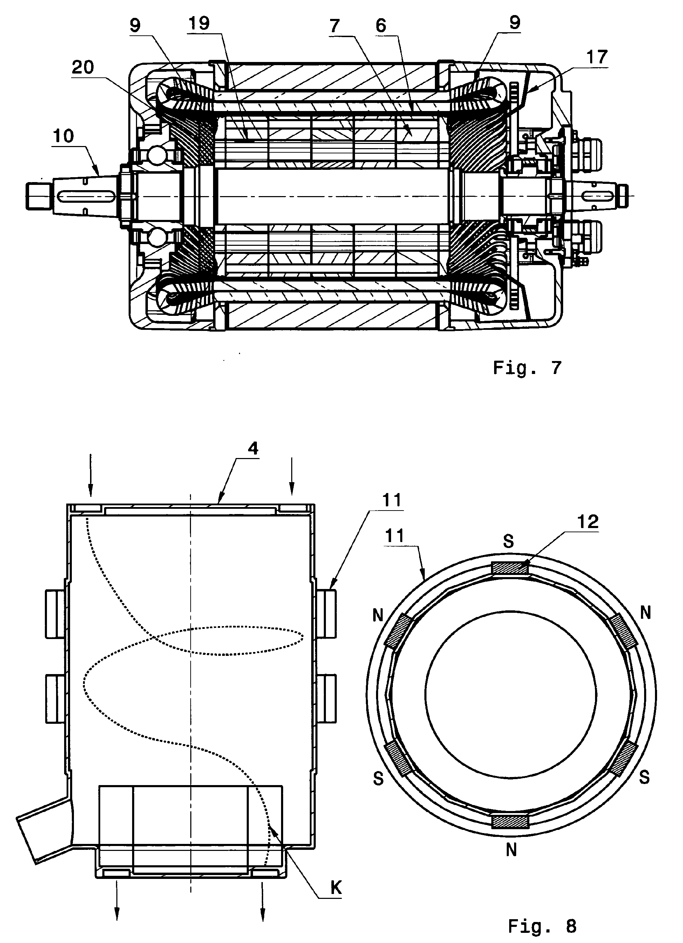

Zusätzlich verfügt die permanentmagneterregte elektrische Maschine 1 über Kanäle 8 zur Führung einer Kühlluft K im Rotorblechpaket 7, welche Kanäle 8 mit einem Lufteinlass 2 und zumindest einem Luftauslass 3 in Verbindung stehen. Um zu verhindern, dass ferromagnetische Partikel über den Lufteinlass 2 in die Kühlkanäle 8 angesaugt werden, ist zumindest im Bereich des Lufteinlasses 2 ein magnetischer Filter angeordnet, der durch entsprechende Permanentmagneten 12 im Bereich des Lufteinlasses 2 gebildet sein kann. Zusätzlich zum magnetischen Filter bzw. den Permanentmagneten 12 kann auch ein mechanischer Filter 4 im Bereich des Lufteinlasses 2 angeordnet sein. Dieser Filter 4 kann beispielsweise durch ein geeignetes Gewebe oder einen Zyklonfilter (siehe Fig 8) gebildet sein.

In Fig. 5a und 5b werden zwei Ausführungsformen eines kombinierten magnetischen und mechanischen Filters 4 im Bereich des Lufteinlasses 2 dargestellt. Der Filter 4 besteht aus einem Rahmen 11, in dem eine bestimmte Anzahl an Permanentmagneten 12 mit geeigneter Polarität angeordnet sind. Das entstehende magnetische Feld, welches durch die strichliert eingezeichneten Feldlinien dargestellt ist, zieht die ferromagnetischen Partikel an und verhindert, dass diese zusammen mit der Kühlluft K in die Kanäle 8 der elektrischen Maschine 1 gelangen. Derartige Permanentmagnete 12 und auch Filter 4 können auch im Bereich der Luftauslässe 3 angeordnet werden (nicht dargestellt), um zu verhindern, dass beispielsweise bei Stillstand der elektrischen Maschine 1 über die Luftauslässe 3 verschmutzte Kühlluft K in die Kühlkanäle 8 gelangt.

Fig. 6a und 6b zeigen zwei Ausführungsformen einer Labyrinthdichtung 13 zur Abdichtung des Luftspalts 6 zwischen Stator S und Rotor R der elektrischen Maschine 1. Fig. 6a zeigt eine radiale Anordnung der Labyrinthdichtung 13, d.h. eine im Wesentlichen horizontale Anordnung. Dabei wird die Labyrinthdichtung durch einen mit dem Rotorblechpaket 7 verbundenen Rotorpressring 9 mit zumindest einer darin angeordneten umlaufenden Nut 15 gebildet. Mit dem Stator S ist ein Dichtungskörper 14 drehfest verbunden, der zumindest einen korrespondierend zu der zumindest einen Nut 15 ausgebildeten umlaufenden Flansche 16 aufweist. Um bei dieser Anordnung der Labyrinthdichtung 13 zu vermeiden, dass die Bestandteile beim Zusammenbau der elektrischen Maschine 1 demontiert und montiert werden müssen, ist der Dichtungskörper 14 vorzugsweise aus elastischem Material, vorzugsweise Silikon, gebildet. Dadurch kann beim Ineinanderschieben des Rotors R und des Stators S der elektrischen Maschine 1 das elastische Material des Dichtungskörpers 14 ausweichen und schließlich die Flansche 16 in der gewünschten Position in die Nuten 15 ragen und auf diese Weise die Labyrinthdichtung 13 bilden.

Natürlich kann eine Labyrinthdichtung 13 auch im Bezug auf die Ausdehnung des Luftspalts 6 vertikal angeordnet werden. Eine derartige Ausführungsform einer axialen Labyrinthdichtung 13 zeigt die Ausführungsform gemäß Fig. 6b. Dabei sind am Rotorblechpaket 9 entsprechende Nuten 15 angeordnet, in welche korrespondierend ausgebildete Flansche 16 an einem Bauteil, der mit dem Stator verbunden ist, angeordnet sind. Bei dieser Ausführungsform müssen die Bestandteile der Labyrinthdichtung 13 nicht aus elastischen Materialien bestehen, um den Zusammenbau der Maschine 1 zu erleichtern.

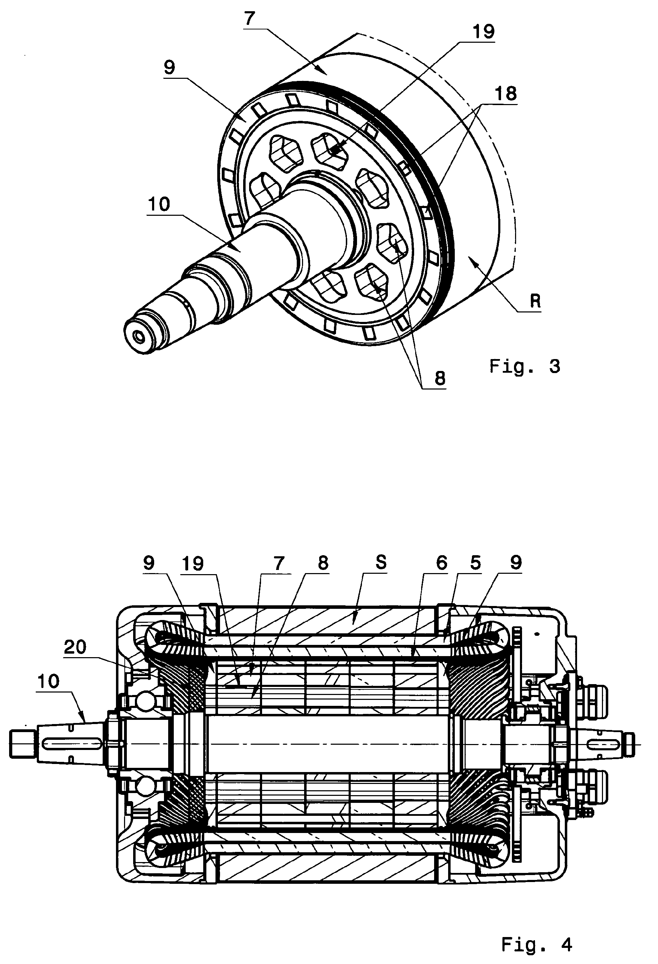

Wie in Fig. 3 dargestellt, werden erfindungsgemäß zusätzlich im Bereich des Luftspalts 6 sogenannte Opfermagnete 18 angeordnet, welche ferromagnetische Partikel anziehen und verhindern, dass diese in den Luftspalt 6 gelangen. Diese Opfermagnete 18 sind, vorzugsweise in konstanten Winkelabständen zueinander, am Rotorpressring 9 angeordnet. Darüber hinaus können auch in den Kühlkanälen 8 des Rotorblechpakets 7 weitere Permanentmagnete 19 platziert werden. Bei der Wartung der elektrischen Maschine können allfällige Verunreinigungen bzw. ferromagnetische Partikel an den Magneten 18, 19 in einfacher Weise durch Klebebänder entfernt werden. Die in den Kühlkanälen 8 angeordneten Permanentmagnete 19 sind auch im Schnittbild der permanenterregten elektrischen Maschine 1 gemäß Fig. 4 dargestellt. Zusätzlich ist in Fig. 4 ein Ventilator 20 gezeigt, über den die Kühlluft K durch die Kühlkanäle 8 transportiert wird. Neben derartigen eigen-ventilierten elektrischen Maschinen sind auch fremd-ventilierte elektrische Maschinen ohne Ventilator 20 möglich.

Fig. 7 zeigt eine weitere Ausführungsform einer permanentmagneterregten elektrischen Maschine 1, bei der im Bereich des Luftspalts 6 zwischen Stator S und Rotor R Luftleitelemente 17 angeordnet sind. Derartige Luftleitelemente 17 verhindern, dass Partikel in den Bereich des Luftspalts 6 gelangen und dort zu Verlusten und somit zu einem Leistungsabfall der Maschine 1 führen. Ansonsten gleicht Fig. 7 der Schnittbildansicht gemäß Fig. 4.

Fig. 8 zeigt eine Ausführungsform eines Filters 4 im Bereich des Lufteinlasses 2 der permanentmagneterregten elektrischen Maschine 1 in Form eines Zyklonfilter mit darin angeordneten Permanentmagneten 12. Bei einem solchen Zyklonfilter bzw. Fliehkraftabscheider werden Partikel durch Fliehkrafteinwirkung aus dem Luftstrom ausgeschieden. Beim erfindungsgemäßen Filter 4 sind in regelmäßigen Winkelabständen Permanentmagnete 12 angeordnet, welche eine Abscheidung ferromagnetischer Partikel aus der Kühlluft K unterstützen.

## Patentansprüche

1. Permanentmagneterregte elektrische Maschine (1) mit einem Stator (S) mit einer Statorwicklung (5), einem Rotor (R) mit einem Rotorblechpaket (7) und darin angeordneten Permanentmagneten, und einem zwischen dem Stator (S) und dem Rotor (R) ausgebildeten Luftspalt (6), welcher Luftspalt (6) zumindest an einer Seite nach außen abgedichtet ist, **dadurch gekennzeichnet, dass** im Bereich des Luftspalts (6) am Rotorpressring (9) Permanentmagnete als Opfermagnete (18) zum Anziehen ferromagnetischer Partikel zum Verhindern des Eindringens der ferromagnetischen Partikel in den Luftspalt (6) angeordnet sind.

2. Elektrische Maschine (1) nach Anspruch 1, **dadurch gekennzeichnet, dass** an zumindest einem seitlichen Ende des Rotorblechpakets (7) eine Labyrinthdichtung (13) vorgesehen ist.

3. Elektrische Maschine (1) nach Anspruch 2, **dadurch gekennzeichnet, dass** die Labyrinthdichtung (13) durch einen mit dem Rotorblechpaket (7) verbundenen Rotorpressring (9) mit zumindest einer darin angeordneten umlaufenden Nut (15) und einem mit dem Stator (5) verbundenen Dichtungskörper (14) mit zumindest einem korrespondierend zu der zumindest einen Nut (15) ausgebildeten umlaufenden Flansche (16) gebildet ist.

4. Elektrische Maschine (1) nach Anspruch 3, **dadurch gekennzeichnet, dass** der Dichtungskörper (14) aus elastischem Material, vorzugsweise Silikon, gebildet ist.

5. Elektrische Maschine (1) nach einem der Ansprüche 1 bis 4, **dadurch gekennzeichnet, dass** Luftleitelemente (17) vor dem Luftspalt (6) angeordnet sind.

6. Elektrische Maschine (1) nach einem der Ansprüche 1 bis 5, **dadurch gekennzeichnet, dass** im Rotor (7) Kanäle (8) zur Führung einer Kühlluft (K) vorgesehen sind, welche mit einem Lufteinlass (2) und einem Luftauslass (3) in Verbindung stehen, und dass im Bereich des Lufteinlasses (2) Permanentmagnete (12) zum Anziehen ferromagnetischer Partikel aus der eintretenden Kühlluft (K) angeordnet sind.

7. Elektrische Maschine (1) nach Anspruch 6, **dadurch gekennzeichnet, dass** vor dem Lufteinlass (2) ein Filter (4) angeordnet ist.

8. Elektrische Maschine (1) nach Anspruch 6 oder 7, **dadurch gekennzeichnet, dass** im Bereich des Luftauslasses (3) Permanentmagnete (12) zum Anziehen ferromagnetischer Partikel angeordnet sind

9. Elektrische Maschine (1) nach einem der Ansprüche 6 bis 8, **dadurch gekennzeichnet, dass** vor dem Luftauslass (3) ein Filter angeordnet ist.

10. Elektrische Maschine (1) nach einem der Ansprüche 1 bis 9, **dadurch gekennzeichnet, dass** die Opfermagnete (18) zum Anziehen ferromagnetischer Partikel im Bereich des Luftspalts (6) am Rotorpressring (9) in regelmäßigen Winkelabständen zueinander angeordnet sind.

11. Elektrische Maschine (1) nach einem der Ansprüche 1 bis 10, **dadurch gekennzeichnet, dass** im Bereich der Kanäle (8) zur Führung der Kühlluft im Rotorblechpaket (7) Permanentmagnete (19) zum Anziehen ferromagnetischer Partikel angeordnet sind.

## Claims

1. An electric machine (1) with permanent magnet excitation comprising a stator (S) having a stator winding (5), a rotor (R) having a rotor lamination stack (7) with permanent magnets arranged therein, and an air gap (6) formed between the stator (S) and the rotor (R), which air gap (6) is sealed against the outside at least on one side, **characterised in that** in the region of the air gap (6) permanent magnets are arranged on the rotor press ring (9) as sacrificial magnets (18) for attracting ferromagnetic particles in order to prevent the ferromagnetic particles from entering the air gap (6).

2. The electric machine (1) according to claim 1, **characterised in that** a labyrinth seal (13) is provided on at least one lateral end of the rotor lamination stack (7).

3. The electric machine (1) according to claim 2, **characterised in that** the labyrinth seal (13) is formed by a rotor press ring (9) connected to the rotor lamination stack (7) having at least one circumferential groove (15) arranged therein and a sealing body (14) connected to the stator (S) having a circumferential flange (16), which is formed correspondingly to the at least one groove (15).

4. The electric machine (1) according to claim 3, **characterised in that** the sealing body (14) is made of an elastic material, preferably silicone.

5. The electric machine (1) according to any one of claims 1 to 4, **characterised in that** air guiding elements (17) are arranged in front of the air gap (6).

6. The electric machine (1) according to any one of claims 1 to 5, **characterised in that** ducts (8) for guiding a cooling air (K) are provided within the rotor (7), which are connected to an air inlet (2) and an air outlet (3), and **in that** permanent magnets (12) for attracting ferromagnetic particles from the entering cooling air (K) are arranged in the region of the air inlet (2).

7. The electric machine (1) according to claim 6, **characterised in that** a filter (4) is arranged in front of the air inlet (2).

8. The electric machine (1) according to claim 6 or 7, **characterised in that** permanent magnets (12) for attracting ferromagnetic particles are arranged in the region of the air outlet (3).

9. The electric machine (1) according to any one of claims 6 to 8, **characterised in that** a filter is arranged in front of the air outlet (3).

10. The electric machine (1) according to any one of claims 1 to 9, **characterised in that** the sacrificial magnets (18) for attracting ferromagnetic particles in the region of the air gap (6) are arranged in equidistant angular distances to one another on the rotor press ring (9).

11. The electric machine (1) according to any one of claims 1 to 10, **characterised in that** permanent magnets (19) for attracting ferromagnetic particles are arranged in the region of the ducts (8) for guiding the cooling air within the rotor lamination stack (7).

## Revendications

1. Machine électrique à excitation par aimants permanents (1) avec un stator (S) avec un enroulement de stator (5), un rotor (R) avec un ensemble de tôles de rotor (7) et des aimants permanents disposés à l'intérieur et un entrefer (6) prévu entre le stator (s) et le rotor (R), cet entrefer (6) étant étanchéifié vers l'extérieur au moins sur un côté, **caractérisée en ce que**, au niveau de l'entrefer (6), sur la bague de serrage du rotor (9), des aimants permanents sont disposés en tant qu'aimants sacrificiels (18) pour l'attraction de particules ferromagnétiques afin d'empêcher la pénétration des particules ferromagnétiques dans l'entrefer (6).

2. Machine électrique (1) selon la revendication 1, **caractérisée en ce que**, sur au moins une extrémité latérale de l'ensemble de tôles du rotor (7), se trouve un joint d'étanchéité à labyrinthe (13).

3. Machine électrique (1) selon la revendication 2, **caractérisée en ce que** le joint d'étanchéité à labyrinthe (13) est constituée d'une bague de serrage de rotor (9) reliée à l'ensemble de tôles du rotor (7), avec au moins une rainure circulaire (15) réalisée à l'intérieur et un corps d'étanchéité (14) relié au stator (5), avec au moins une bride circulaire (16) conçue de manière correspondante à l'au moins une rainure (15).

4. Machine électrique (1) selon la revendication 3, **caractérisée en ce que** le corps d'étanchéité (14) est constitué d'un matériau élastique, de préférence de silicone.

5. Machine électrique (1) selon l'une des revendications 1 à 4, **caractérisée en ce que** des éléments déflecteurs (17) sont disposés avant l'entrefer (6).

6. Machine électrique (1) selon l'une des revendications 1 à 5, **caractérisée en ce que**, dans le rotor (7), sont prévus des canaux (8) pour le guidage d'un air de refroidissement (K), qui sont reliés avec une admission d'air (2) et une évacuation d'air (3) et **en ce que**, au niveau de l'admission d'air (2), se trouvent des aimants permanents (12) pour l'attraction de particules ferromagnétiques provenant de l'air de refroidissement (k) entrant.

7. Machine électrique (1) selon la revendication 6, **caractérisée en ce qu'**un filtre (4) est disposé avant l'admission d'air (2).

8. Machine électrique (1) selon la revendication 6 ou 7, **caractérisée en ce que**, au niveau de l'évacuation d'air (3) se trouvent des aimants permanents (12) pour l'attraction de particules ferromagnétiques.

9. Machine électrique (1) selon l'une des revendications 6 à 8, **caractérisée en ce que**, avant l'évacuation d'air (3), se trouve un filtre.

10. Machine électrique (1) selon l'une des revendications 1 à 9, **caractérisée en ce que**, pour l'attraction des particules ferromagnétiques, les aimants sacrificiels (18) sont disposés à, des distances angulaires entre eux au niveau de l'entrefer (6) sur la bague de serrage du rotor (9).

11. Machine électrique (1) selon l'une des revendications 1 à 10, **caractérisée en ce que**, au niveau des canaux (8), pour le guidage de l'air de refroidissement dans l'ensemble de tôles du rotor (7), se trouvent des aimants permanents (19) pour l'attraction de particules ferromagnétiques.
